# EUROPÄISCHE PATENTSCHRIFT

(11) **EP 1 793 237 B1**
(45) Veröffentlichungstag und Bekanntmachung des Hinweises auf die Patenterteilung: **25.08.2010**
(21) Anmeldenummer: 05400042.7
(22) Anmeldetag: 01.12.2005
(51) Int. Cl.: G01S 5/14, G08G 5/00, H04B 7/185, G01C 21/00

(54) **Ortungssystem**
Position finding system
Système de localisation

(43) Veröffentlichungstag der Anmeldung: 06.06.2007
(73) Patentinhaber: EUROCOPTER DEUTSCHLAND GmbH, 86609 Donauwörth (DE); Scotty Tele Transport Corporation AG, 8074 Grambach (AT)
(72) Erfinder: Lees, Thilo, 86660 Tapfheim (DE); Stuber, Robert, 86688 Marxheim (DE); Seitz, Peter, 86643 Rennertshofen (DE)
(74) Vertreter: GPI & Associés

(56) Entgegenhaltungen:
- WO-A-2004/042418
- DE-A1- 10 010 134
- US-A1- 2002 173 888
- US-B1- 6 735 521
- US-B1- 6 799 094

## Beschreibung

Die vorliegende Erfindung betrifft ein Ortungssystem für einen Hubschrauber, einen Hubschrauber mit einem derartigen Ortungssystem, sowie ein Hubschrauber-Ortungs-Verfahren.

Zur Führung der Truppen in einem Gefecht ist es von großem Interesse, genaue Kenntnisse von dem Gefechtsfeld, der eigenen Truppenstärke sowie der Stärke des Gegners zu erlangen. Ein Informationsvorsprung kann entscheidend für den Gefechtsausgang sein, denn die Informationen versetzen den Gefechtsführer in die Lage unerwartete taktische Manöver durchzuführen. Insbesondere die Mittel der Täuschung, Verschleierung und Geschwindigkeit können aufgrund eines besseren Kenntnisstandes vorteilhaft eingesetzt werden.

Deshalb werden üblicherweise Radarstationen in der Nähe der Einsatzgebiete errichtet. Die Radarstationen dienen der Positionsbestimmung von freundlichen oder feindlichen Truppeneinheiten, z.B. Luftfahrzeugen. Zusätzlich wird eine oder mehrere Funkstationen errichtet, um Sprachdaten zwischen den Luftfahrzeugen und einer militärische Leitstelle zu übertragen. Die Reichweite von Radarstationen ist jedoch im Einzelfall relativ beschränkt. Sofern bodennahe Truppeneinheiten wie Hubschrauber zu orten sind, verringert sich die Reichweite der Radarstationen zusätzlich. Befindet sich das militärische Einsatzgebiet im Ausland, so werden für den Aufbau und die Verteidigung der Radarstationen erhebliche Ressourcen gebunden. Aufgrund des Zeitaufwandes für den Transport und Aufbau des Radars verzögert sich damit die Informationsgewinnung. Zudem ist es unter Umständen notwendig die Radarstation durch Truppen zu verteidigen. Wegen der Unzuverlässigkeit der von den Funkstationen bereitgestellten Funkverbindung müssen oft mehrere, z.B. zwei Hubschrauber gemeinsam einen Einsatz fliegen, damit sichergestellt ist, dass wenigsten bei einem der Hubschrauber eine fortdauernd funktionierende Funkverbindung gegeben ist, über die entsprechende Sprachdaten an die Leitstelle übertragen werden können.

In der Druckschrift DE 100 10 134 A1 ist ein Telematik-Verfahren für Hubschrauber beschrieben. Das Verfahren wird z.T. hubschrauberseitig durchgeführt, und z.T. an einer Zentrale/Gegenstelle. Dabei kommuniziert eine hubschrauberseitige Mobilfunk-Sende-/Empfangseinheit mit einer Mobilfunk-Sende-/Empfangseinheit der Zentrale/Gegenstelle.

Gemäß der Erfindung wird ein Ortungssystem für einen Hubschrauber mit den Merkmalen des Anspruchs 1, ein Hubschrauber mit den Merkmalen des Anspruchs 10, und ein Hubschrauber-Ortungs-Verfahren mit den Merkmalen des Anspruchs 11 zur Verfügung gestellt. Vorteilhafte Weiterbildungen der Erfindung sind in den Unteransprüchen angegeben.

Das Ortungssystem ist dazu vorgesehen, in dem Luftfahrzeug integriert zu werden; es umfasst eine Positionsbestimmungsvorrichtung. Folglich kann jederzeit die Position des Luftfahrzeugs ermittelt werden. Eine Satellitenkommunikationsvorrichtung zum Senden und Empfangen von Sprache und Daten über ein Satellitenkommunikationssystem an eine Leitstelle ist ferner vorgesehen. Die Satellitenkommunikation erlaubt es Informationen über große Entfernung in Echtzeit an eine Leitstelle zu übertragen. Schließlich ist eine Schnittstelle vorgesehen. Die Schnittstelle dient der automatischen Übertragung von Positionsdaten der Positionsbestimmungsvorrichtung an die Leitstelle über die Satellitenkommunikationsvorrichtung. Die Leitstelle ist damit jederzeit über die Position des Luftfahrzeuges informiert. Sofern alle Luftfahrzeuge über erfindungsgemäße Ortungssysteme verfügen, bedarf es keiner Radarstationen und Funkstationen, um zeitnah Informationen über die eigenen Luftfahrzeug-Einheiten zu erhalten. Deshalb kann das erfindungsgemäße System schneller und leichter implementiert werden. Vorzugsweise umfasst die Vorrichtung zur Positionsbestimmung einen Empfänger eines satellitengestützten Navigationssystems. Signale von Satelliten des Navigationssystems werden davon empfangen, um aus den empfangenen Signalen die aktuelle Position des Luftfahrzeugs zu berechnen. Das Satellitennavigationssystem erlaubt es, jederzeit und weltweit die Position des Luftfahrzeuges zu erfassen. Als Navigationssystem kann insbesondere GPS (Global Positioning System) eingesetzt werden. GPS ist ein satellitengestütztes Navigationssystem zur weltweiten Positionsbestimmung, das vom US-Verteidigungsministerium betrieben wird.

Die Vorrichtung zur Positionsbestimmung besitzt vorzugsweise einen Magnetsensor zum Erfassen des Erdmagnetfeldes. Der Magnetsensor erlaubt es die relative Lage des Luftfahrzeuges zum Erdmagnetfeld zu bestimmen. Damit ist es möglich, die Orientierung des Luftfahrzeugs relativ zum Erdmagnetfeld zu bestimmen und an die Leitstelle zu übertragen. Ferner ist es vorteilhaft, wenn das Ortungssystem einen Kreiselkompass oder einen elektronischen Kompass umfasst. Damit können zusätzliche Informationen an die Leitstelle übertragen werden.

Die Schnittstelle umfasst bevorzugt eine Kryptografieeinheit. Die Kryptografieeinheit ist dazu vorgesehen Daten zu verschlüsseln, die über die Satellitenkommunikationsvorrichtung and die militärische Leitstelle gesendet werden. Ferner sorgt die Kryptografieeinheit dafür, dass diejenigen Daten entschlüsselt werden, die von der Satellitenkommunikationsvorrichtung empfangen werden. Die Kryptografieeinheit verhindert, dass die übertragenen Nachrichten abgehört werden können.

Die Satellitenkommunikationsvorrichtung umfasst eine Antenne, die an einer vorbestimmten Position an dem Luftfahrzeug befestigt ist. Die Positionierung auf dem Luftfahrzeug wird so gewählt, dass nahezu jederzeit der Satellitenempfang gewährleistet ist. Bevorzugt ist ein Fernsprechendgerät an die Schnittstelle angeschlossen. Somit kann über die Satellitenkommunikationsvorrichtung eine Fernsprechverbindung mit der Leitstelle aufgebaut werden - oder einem beliebigen anderen, an ein Telefonnetz angeschlossenen Endgerät (da vom Luftfahrzeug, insbesondere Hubschrauber aus über die Satellitenkommunikationsvorrichtung eine gewöhnliche Satelliten-Telefon-Verbindung hergestellt wird). Neben den automatisch übermittelten Positionsdaten, kann die Besatzung des Luftfahrzeugs Daten fernmündlich an die Leitstelle jederzeit übertragen. Eine Funkanlage zum Aufbauen einer Funkverbindung mit Bodentruppen ist zudem vorgesehen. Die Funkanlage ist an die Schnittstelle angeschlossen. Damit kann die Besatzung des Luftfahrzeugs mit den Bodentruppen kommunizieren. Bevorzugt wird die Schnittstelle als Vermittlungsstelle eingesetzt. Die Bodentruppen können somit direkt mit der Leitstelle kommunizieren. Sofern die Bodentruppen über Satellitennavigationssysteme verzügen, können auch diese Informationen jederzeit automatisch an die Leitstelle übermittelt werden.

Vorzugsweise sind nur die Positionsbestimmungsvorrichtung und die Antenne der Satellitenkommunikationsvorrichtung in dem Luftfahrzeug integriert. Die Schnittstelle und insbesondere die Satellitenkommunikationsvornchtung ohne Antenne sind in einem abnehmbaren Modul integriert. Dieser modulare Aufbau erlaubt es ein einziges Modul für mehrere Luftfahrzeuge zu verwenden. Da üblicherweise nur ein Teil der Luftfahrzeuge im Einsatz sind, müssen nicht alle Luftfahrzeuge permanent mit dem abnehmbaren Modul ausgerüstet sein. Das abnehmbare Modul wird jeweils in die Luftfahrzeuge integriert, welche zum Einsatz vorgesehen sind. Vorzugsweise ist ein Fach vorgesehen, in welches das abnehmbare Modul gesteckt wird. Der Austausch des Moduls wird damit beschleunigt und vereinfacht.

Ein bevorzugtes Ausführungsbeispiel der vorliegenden Erfindung wird nachfolgend anhand der beigefügten Figuren beschrieben. Es zeigen:
Fig. 1 eine schematische Ansicht eines Satellitenkommunikationssystems, das einen Hubschrauber mit einem erfindungsgemäßen Ortungssystem umfasst;
Fig. 2 eine schematische Ansicht des Ortungssystems gemäß dem bevorzugten Ausführungsbeispiel; und
Fig. 3 eine schematische Ansicht der Positionsbestimmungsvorrichtung 70 von Fig. 2.

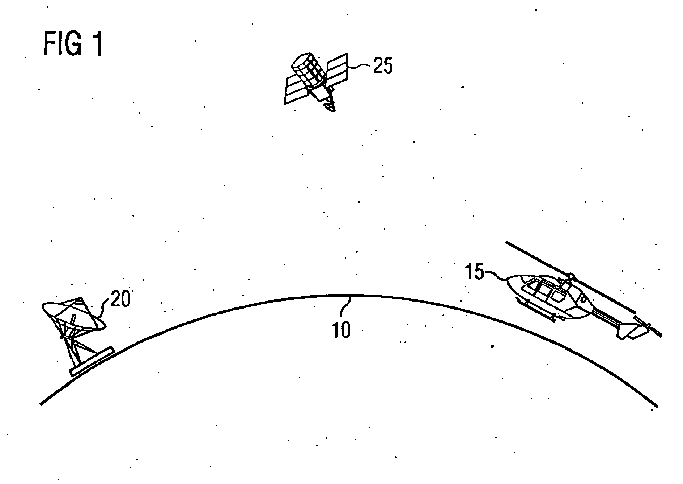

Das in Fig. 1 gezeigte Kommunikationssystem besteht aus einem Satelliten 25, einer Leitstelle 20, insbesondere einer militärischen Leitstelle, und einem Hubschrauber 15. Das Kommunikationssystem hat die Aufgabe, die Position des Hubschraubers 15 jederzeit an die Leitstelle 20 zu übertragen. Auf diese Weise sind der Leitstelle die Positionsdaten des Hubschraubers 15 jederzeit bekannt. Der Hubschrauber 15 besitzt eine Positionsbestimmungsvorrichtung und eine Antenne, um mit der Leitstelle 15 zu kom munizieren. Wenn ein ganzes Geschwader von Hubschraubern 15 oder bemannten bzw. unbemannten Luftfahrzeugen im Einsatz sind, so wird jedes der Luftfahrzeuge mit einem erfindungsgemäßen Ortungssystem ausgestattet, welches die Positionsdaten jederzeit an die Leitstelle überträgt. Einer militärischen Führung in der Leitstelle wird damit ermöglicht, das aktuelle taktische Verhalten der eigenen Eigenheiten zu verfolgen und gegebenenfalls zu korrigieren. Bevorzugt werden die Positionsdaten auf einer elektronischen Karte angezeigt. Ferner ist es möglich, die aktuellen Positionsdaten aller Einheiten an die beteiligten Luftfahrzeuge zu übertragen. Somit hat jedes Luftfahrzeug Kenntnis von der Position der übrigen Luftfahrzeuge des Geschwaders.

Bei dem Satelliten 25 kann es sich z.B. um einen geostationären Satelliten handeln.

Die Leitstelle besitzt eine Anzeigevorrichtung, auf der alle aktuellen Positionsdaten angezeigt werden. Die Positionsdaten werden vor dem Hintergrund einer geographischen Karte des Einsatzgebietes des Hubschraubers 15 angezeigt. Die Positionsdaten umfassen vorzugsweise die geographische Breite und Höhe des Hubschraubers 15. Ferner wird die Höhe des Hubschraubers 15 über der Erdoberfläche 10 ermittelt. Die Positionsdaten können zwei- oder dreidimensional vor dem Kartenhintergrund angezeigt werden. Die Leitstelle besitzt dazu einen Rechner mit einem Kartenspeicher für die geographischen Daten. Über eine elektronische Schnittstelle empfängt der Rechner die Positionsdaten des Hubschraubers 15 und bestimmt dessen Position innerhalb der gespeicherten Karte. Die Positionsdaten und Kartendaten werden an die Anzeigevorrichtung übertragen. Des weiteren ist es möglich bestimmte Sektoren, insbesondere Landesgrenzen oder Frontlinien, auf dem Bildschirm anzuzeigen. Der Abstand des Luftfahrzeugs zu einer Sektorengrenze wird jederzeit visualisiert. Damit können die Piloten des Luftfahrzeugs gewarnt werden, bevor sie eine Sektorengrenze versehentlich überschreiten. Vorteilhaft werden die zwei- oder dreidimensional vor dem Kartenhintergrund dargestellten Positionsdaten des Hubschraubers 15 - ggf. zusammen mit den Positionsdaten weiterer Hubschrauber, und/oder den o.g. Sektordaten - in Form entsprechender Videodaten über den Satteliten 25 an den Hubschrauber 15 übertragen, und an einem dort vorgesehenen Bildschirm visualisiert.

Neben den Positionsdaten können noch weitere Daten über das Satellitenkommunikationssystem in die Leitstelle übertragen werden. Insbesondere elektronische Post, Fotos oder bewegte Bilder vom Einsatzgebiet bzw. entsprechende Videodaten können an die Leitstelle übertragen werden. Die bewegten Bilder und/oder Fotos können z.B. von einer am Hubschrauber befestigten, gewöhnlichen Kamera aufgenommen werden, und/oder z.B. von einer Infrarot-Kamera, die entsprechende - an die Leitstelle übertragene - Infrarot-Bilddaten erzeugt. Das Satellitenkommunikationssystem kann auch auf herkömmliche Weise zur telefonischen Kommunikation verwendet werden. Wenn der Hubschrauber 15 als Sanitätshubschrauber 15 zum Transport und zur Behandlung von Verletzten eingesetzt wird, kann das Satellitenkommunikationssystem zur Übertragung medizinischer Daten eingesetzt werden. Das avisierte Krankenhaus erhält damit bereits vor Einkunft des Hubschraubers 15 alle maßgeblichen Informationen über den medizinischen Zustand des Patienten. Notwendige Behandlungsmaßnahmen können bereits vor Ankunft des Hubschraubers 15 eingeleitet werden, so dass die Notfall-Behandlung im Krankenhaus schneller durchgeführt werden kann. Ferner kann der zuständige Krankenhausarzt bereits die Behandlung des Patienten mit den Rettungsärzten und Rettungssanitätern im Hubschrauber 15 koordinieren, und/oder es können - ferngesteuert - im Hubschrauber 15 entsprechende telemedizinischen Einrichtungen betätigt werden.

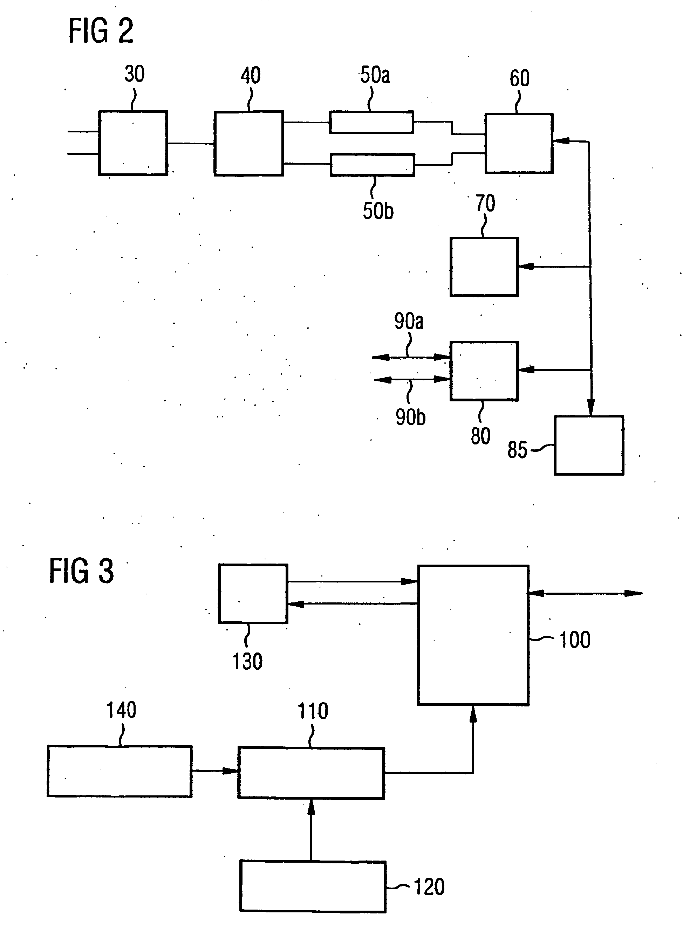

Fig. 2 zeigt eine schematische Ansicht des Ortungssystems gemäß dem bevorzugten Ausführungsbeispiel. Das Ortungssystem besitzt eine Antenne 30 für die Satellitenkommunikation mit der Leitzentrale und eine Positionsbestimmungsvorrichtung 80 zum Bestimmen der Hubschrauber-Position. Die zu ermittelnden Positionsdaten sind die geographische Länge und Breite, auf der sich der Hubschrauber 15 befindet. Ferner ist dessen Höhe über dem Erdboden zu ermitteln. Weitere Positionsdaten können die Lage bzw. Orientierung des Hubschraubers 15 relativ zu den Himmelsrichtungen (Norden, Osten, Süden, Westen) sein. Von Interesse ist auch die Richtung und der Betrag der Geschwindigkeit und/oder Beschleunigung des Hubschraubers 15. Die Positionsdaten gelangen über eine Schnittstelle 60 zu der Antenne 30. Die Schnittstelle 60 fungiert als Steuereinheit für die Satellitenkommunikation. Durch die Schnittstelle werden Daten von der Positionsbestimmungsvorrichtung als solche erkannt und über eine Kryptographie-Einheit und einen Multiplexer 40 an die Antenne 30 übertragen. Eine weitere Kryptographie-Einheit 50b ist vorgesehen, welche insbesondere zur Verschlüsselung von Echtzeit-Informationen vorgesehen ist.

Die Schnittstelle 60 unterscheidet zwischen Echtzeit-Informationen, die in Echtzeit zur Leitstelle gelangen müssen, und allen weiteren Informationen. Echtzeit-Informationen sind insbesondere Sprachsignale zur Übermittlung von Gesprächen zwischen dem Hubschrauber 15 und der Leitstelle. Echtzeit-Informationen benötigen einen ununterbrochenen Datenfluss, um erfolgreich übertragen zu werden. Daher werden Echtzeit-Informationen in der Regel mit Priorität übertragen. Insbesondere bei Überlastung der Übertragungsstrecke wird ein geringerer Aufwand zur Verschlüsselung betrieben, damit der Informationsfluss nicht unterbrochen wird. Hochbrisante Informationen, beispielsweise die Position des Hubschraubers, werden hingegen immer stark verschlüsselt. Gelingt einem Gegner die Entschlüsselung der Positionsdaten, hat er einen entscheidenden taktischen Vorteil. Deshalb werden diese Daten aufwendig verschlüsselt.

Des weiteren ist eine Headset-Steuerung 80 vorgesehen, die auch mit der Antennen-Steuerungseinheit 60 verbunden werden kann, bzw. über eine Leitung mit der hubschraubereigenen Kommunikationsanlage verbunden ist. Es handelt sich dabei um eine Telefonanlage, die mit zwei Headsets bzw. Kopfhörer-Mikrofon-Einheiten für den Piloten und Copiloten über die Leitungen 90a und 90b verbunden ist. Der Pilot resp. Copilot, oder ein weiterer Passagier des Hubschraubers kann über das SatellitenKommunikationssystem direkt mit der Leitstelle telefonieren. Die Steuerungseinheit 60 steuert den Datenverkehr zwischen der Positionsbestimmungsvorrichtung 70, der Headset-Steuerung 80 und einer Funkanlage 85. Die Funkanlage 85 sendet auf Frequenzen, die für die Kommunikation mit Bodentruppen ausgelegt ist. Die Satellitenkommunikationsvorrichtung des Hubschraubers fungiert in diesem Fall als Vermittlungsstelle, die ein Telefongespräch zwischen den Bodentruppen und der Leitstelle vermittelt.

Fig. 3 zeigt eine schematische Ansicht der Positionsbestimmungsvorrichtung 70 von Fig. 2. Die Positionsbestimmungsvorrichtung besitzt eine Steuerungseinheit 100, die sowohl an eine Antennen-Steuerungseinheit 130 für eine GPS-Antenne als auch an einen Datenkonvertierer 110 angeschlossen ist.

GPS (Global Positioning System) ist ein satellitengestütztes Navigationssystem zur weltweiten Positionsbestimmung. GPS basiert auf Satelliten, die ständig Signale ausstrahlen, aus deren Signallaufzeit GPS-Empfänger ihre Position bestimmen können. Aus der Laufzeit der GPS-Signale lässt sich der Abstand zu den Satelliten berechnen. Sind die Abstände zu drei Satelliten bekannter Position erfasst, so ist der eigene Standort eindeutig festgelegt. Der Satellitenstandort ändert sich ständig und mit der Entfernung des Satelliten zur Erde. Der Satellit strahlt fortwährend seine Positionsdaten und ein Zeitsignal aus. Aus dem Abstand des GPS-Empfängers von drei Satelliten und den Satellitenpositionen lässt sich der Standort des GPS-Empfänger berechnen.

Mit den GPS-Signalen lässt sich aber nicht nur die Position, sondern auch die Geschwindigkeit des Empfängers bestimmen. Durch die relative Bewegung des Empfängers zu den Satelliten ergibt sich durch den Doppler-Effekt eine Verschiebung des Signals, und da die Geschwindigkeit der Satelliten bekannt ist, lässt sich die Geschwindigkeit des Empfängers berechnen.

Der Hubschrauber besitzt jedoch einen eigenen Geschwindigkeits- und Beschleunigungssensor. Diese Sensoren können anstelle von oder ergänzend zu dem GPS-Empfänger verwendet werden, um die Geschwindigkeit, Beschleunigung und Orientierung des Hubschraubers relativ zu einer Himmelsrichtung (z.b. Norden) zu messen. Ein Datenkonvertierer 110 ist dazu vorgesehen, die entsprechenden Daten von unterschiedlichen Sensoren zu erhalten. Diese Daten werden gewandelt und an die Steuerungseinheit weitergegeben, welche sie an die Satellitenkommunikationsvorrichtung weiterreicht. Als Sensor ist insbesondere ein Magnetsensor 140 vorgesehen. Der Magnetsensor misst die Richtung des Erdmagnetfeldes. Als Magnetsensor wird bevorzugt ein Fluxgate eingesetzt, da sie eine sehr genaue Magnetfeldmessung ermöglichen. Da die Richtung des Erdmagnetfeldes Norden ist, kann mittels des Magnetsensors die Orientierung des Hubschraubers ermittelt werden. Der Magnetsensor 140 fungiert letztlich als Magnetkompass.

Alternativ oder ergänzend zum Magnetsensor kann ein Kreiselkompass eingesetzt werden. Der Kreiselkompass bedient sich eines schnell rotierenden Kreisels, dessen Rotationsachse parallel zur Himmelsrichtung Norden ausgerichtet ist. Aufgrund der Drehimpulserhaltung richtet sich die Rotationsachse des im wesentlichen reibungsfrei gelagerten Kreisels immer in dieselbe Richtung aus. Gegebenenfalls kann die Messung des Magnetsensors zur Korrektur der Orientierung der Rotationsachse verwendet werden. Der Kreiselkompass kann dazu verwendet werden die Orientierung des Hubschraubers relativ zur Rotationsachse zu messen. Ferner ist es möglich eine Rotationsgeschwindigkeit des Hubschraubers relativ zur Rotationsachse des Kreiselkompasses zu erfassen. Alternativ zum Kreiselkompass sind auch AHRS-Systeme einsetzbar. Es handelt sich dabei im wesentlichen um ein Halbleiterbasiertes Gyroskop. AHRS ist eine Abkürzung für Attitude and Heading Reference System, was auf Deutsch Lage- und Fahrtrichtungs-Referenzsystem bedeutet.

## Patentansprüche

1. Ortungssystem für einen Hubschrauber (15), wobei das Ortungssystem umfasst:
eine Positionsbestimmungsvorrichtung (70),
eine Satellitenkommunikationsvorrichtung zum Senden und Empfangen von Sprache und/oder Daten über ein Satellitenkommunikationssystem an eine Leitstelle (20),
eine Schnittstelle (60) zum automatischen Übertragen von Positionsdaten der Positionsbestimmungsvorrichtung (70) an die Leitstelle (20) über die Satellitenkommunikationsvorrichtung, und
eine Funkanlage (85) zum Aufbauen einer Funkverbindung mit Bodentruppen, **dadurch gekennzeichnet, dass** die Schnittstelle (60) dazu ausgebildet ist, als Vermittlungsstelle für die Datenübertragung zwischen den Bodentruppen und der Leitstelle (20) zu fungieren, so dass die Bodentruppen über die Satellitenkommunikationsvorrichtung direkt mit der Leitstelle kommunizieren können.

2. Ortungssystem gemäß Anspruch 1, wobei das Satellitenkommunikationssystem ein System mit einem oder mehreren geostationären Satelliten ist.

3. Ortungssystem gemäß Anspruch 1, wobei die Vorrichtung zur Positionsbestimmung (70) einen Empfänger (130) eines satellitengestützten Navigationssystems umfasst, der dazu ausgebildet ist, Signale von Satelliten (25) des Navigationssystems zu empfangen und aus den empfangenen Signalen die aktuelle Position des Hubschraubers (15) zu berechnen.

4. Ortungssystem gemäß Anspruch 1, wobei die Vorrichtung zur Positionsbestimmung (790) einen Magnetsensor zum Erfassen des Erdmagnetfeldes aufweist.

5. Ortungssystem gemäß Anspruch 1, wobei die Vorrichtung zur Positionsbestimmung ein Mittel (120) zur Bestimmung der Orientierung des Hubschraubers, insbesondere einen Magnetkompass, einen Kreiselkompass oder einen elektronischen Kompass, aufweist.

6. Ortungssystem gemäß einem der vorstehenden Ansprüche, mit einer Kryptografieeinheit (50a, 50b) zum Verschlüsseln von Daten, die über die Satellitenkommunikationsvorrichtung an die Leitstelle (20) gesendet werden, und zum Entschlüsseln von Daten, die verschlüsselt von der Satellitenkommunikationsvorrichtung empfangen werden.

7. Ortungssystem gemäß einem der vorstehenden Ansprüche, wobei die Satellitenkommunikationsvorrichtung eine Antenne (30) aufweist, die an einer vorbestimmten Position an dem Hubschrauber befestigt ist.

8. Ortungssystem gemäß einem der vorstehenden Ansprüche, mit einem Fernsprechendgerät (80), welches mit der Satellitenkommunikationsvorrichtung verbunden ist, um eine Fernsprechverbindung mit der Leitstelle (20) aufzubauen.

9. Ortungssystem gemäß einem der vorstehenden Ansprüche, wobei nur die Positionsbestimmungsvorrichtung (70) und eine Antenne (30) der Satellitenkommunikationsvorrichtung in dem Hubschrauber (15) integriert sind und die Schnittstelle (60) sowie insbesondere die Satellitenkommunikationsvorrichtung ohne Antenne in einem abnehmbaren Modul integriert sind.

10. Hubschrauber, mit einem Ortungssystem gemäß einem der vorstehenden Ansprüche 1 bis 9.

11. Hubschrauber-Ortungs-Verfahren, bei dem ein System nach einem der Ansprüche 1 - 9 verwendet wird, und welches die Schritte umfasst:
- Übertragen von Positionsdaten einer Positionsbestimmungsvorrichtung (70) eines Hubschraubers an eine Leitstelle (20) über ein Satellitenkommunikationssystem.

## Claims

1. A location system for a helicopter (15), the location system comprising:
a position-determining device (70),
a satellite communications device for sending and receiving speech and/or data via a satellite communications system to a control centre (20);
an interface (60) for automatically transmitting positional data of the position-determining device (70) to the control centre (20) via the satellite communications device, and
a radio installation (85) for establishing a radio link with ground troops, **characterised in that** the interface (60) is designed to act as a switching exchange for the data transmission between the ground troops and the control centre (20), so that the ground troops can communicate directly with the control centre via the satellite communications device.

2. A location system according to Claim 1, the satellite communications system being a system with one or more geostationary satellites.

3. A location system according to Claim 1, the device (70) for determining position comprising a receiver (130) of a satellite-assisted navigation system which is designed to receive signals from satellites (25) of the navigation system and to calculate the current position of the helicopter (15) from the received signals.

4. A location system according to Claim 1, the device for determining position (70) having a magnetic sensor for detecting the Earth's magnetic field.

5. A location system according to Claim 1, the device for determining position having a means (120) for determining the orientation of the helicopter, in particular a magnetic compass, a gyro compass or an electronic compass.

6. A location system according to one of the preceding claims, with a cryptography unit (50a, 50b) for encrypting data sent via the satellite communications device to the control centre (20), and for decrypting data received in encrypted form by the satellite communications device.

7. A location system according to one of the preceding claims, the satellite communications device having an antenna (30) which is fastened in a predetermined position on the helicopter.

8. A location system according to one of the preceding claims, with telephone terminal equipment (80) which is connected to the satellite communications device, in order to establish a telephone link with the control centre (20).

9. A location system according to one of the preceding claims, wherein only the position-determining device (70) and an antenna (30) of the satellite communications device is integrated in the helicopter (15) and the interface (60) and also in particular the satellite communications device without antenna are integrated in a removable module.

10. A helicopter, with a location system according to one of the preceding Claims 1 to 9.

11. A helicopter location method, in which a system according to one of Claims 1 to 9 is used, and which comprises the steps:
- transmission of positional data of a position-determining device (70) of a helicopter to a control centre (20) via a satellite communications system.

## Revendications

1. Système de localisation pour un hélicoptère (15), comprenant : un dispositif de détermination de position (70),
un appareil de communications par satellite destiné à envoyer et recevoir un signal vocal et/ou des données par l'intermédiaire d'un système de communications par satellites à/d'un poste de commande (20), une interface (60) destinée à la transmission automatique des données de position du dispositif de détermination de position (70) au poste de commande (20) par l'intermédiaire du système de communications par satellite, et
une installation de radiocommunication (85) destinée à constituer une liaison radio avec les forces terrestres,
**caractérisé en ce que** l'interface (60) est constituée de sorte à servir de centre de commutation pour la transmission de données entre les forces terrestres et le poste de commande (20), de telle sorte que les forces terrestres puissent communiquer par l'intermédiaire de l'appareil de communications par satellite directement avec le poste de commande.

2. Système de localisation selon la revendication 1, dans lequel le système de communications par satellite est un système comportant un ou plusieurs satellites géostationnaires.

3. Système de localisation selon la revendication 1, dans lequel le dispositif de détermination de position (70) comprend un récepteur (130) d'un système de navigation par satellite, qui est configuré pour recevoir les signaux des satellites (25) du système de navigation et calculer à partir des signaux reçus la position réelle de l'hélicoptère (15).

4. Système de localisation selon la revendication 1, dans lequel le dispositif de détermination de position (70) comprend un capteur magnétique destiné à détecter le champ magnétique terrestre.

5. Système de localisation selon la revendication 1, dans lequel le dispositif de détermination de position comprend un moyen (120) pour déterminer l'orientation de l'hélicoptère, notamment un compas magnétique, un compas gyroscopique ou un compas électronique.

6. Système de localisation selon l'une quelconque des revendications précédentes, comportant un organe de cryptographie (50a, 50b) destiné à coder des données qui sont envoyées par l'intermédiaire de l'appareil de communications par satellite au poste de commande (20), et à décoder des données qui sont reçues codées par l'appareil de communications par satellite.

7. Système de localisation selon l'une quelconque des revendications précédentes, dans lequel l'appareil de communications par satellite comprend une antenne (30), qui est fixée à l'hélicoptère à une position prédéterminée.

8. Système de localisation selon l'une quelconque des revendications précédentes, comportant un poste terminal de téléphone (80), qui est relié à l'appareil de communications par satellite, pour constituer une liaison téléphonique avec le poste de commande (20).

9. Système de localisation selon l'une quelconque des revendications précédentes, dans lequel seuls le dispositif de détermination de position (70) et une antenne (30) de l'appareil de communications par satellite sont intégrés dans l'hélicoptère (15) et l'interface (60) et notamment l'appareil de communications par satellite sans l'antenne sont intégrés dans un module amovible.

10. Hélicoptère, comprenant un système de localisation selon l'une quelconque des revendications précédentes 1 à 9.

11. Procédé de localisation d'hélicoptère, dans lequel un système selon l'une des revendications précédentes 1 à 9 est utilisé, et qui comprend les étapes consistant à :
- transmettre des données de position d'un dispositif de détermination de position (70) d'un hélicoptère à un poste de commande (20) par l'intermédiaire d'un système de communications par satellite.
